# EUROPEAN PATENT SPECIFICATION

(11) **EP 2 690 694 B1**
(45) Date of publication and mention of the grant of the patent: **09.11.2016**
(21) Application number: 12765300.4
(22) Date of filing: 23.03.2012
(51) Int. Cl.: H01M 8/0256, H01M 8/0236, H01M 8/0258, H01M 8/124

(54) **FUEL CELL**
BRENNSTOFFZELLE
PILE À COMBUSTIBLE

(30) Priority: 25.03.2011 JP 2011067326
(43) Date of publication of application: 29.01.2014
(73) Proprietor: Murata Manufacturing Co., Ltd., Nagaokakyo-shi, Kyoto 617-8555 (JP)
(72) Inventor: YOKOKURA, Osamu, Nagaokakyo-shi Kyoto 617-8555 (JP)
(74) Representative: Reeve, Nicholas Edward
(86) International application number: PCT/JP2012/057496
(87) International publication number: WO 2012/133175

(56) References cited:
- EP-A1- 0 495 512
- EP-A1- 2 693 545
- WO-A1-2010/007722
- JP-A- H10 302 818
- JP-A- 2002 050 370
- JP-A- 2002 216 807
- JP-A- 2005 310 692
- JP-A- 2005 310 700
- JP-A- 2008 053 045
- US-A1- 2005 061 151
- US-B1- 6 183 897

## Description

### TECHNICAL FIELD

The present invention relates to a fuel cell. In particular, the present invention relates to a solid oxide fuel cell.

### BACKGROUND ART

In recent years, attention to fuel cells has been increased as a new energy source. Examples of fuel cells include solid oxide fuel cells (SOFC), molten carbonate fuel cells, phosphoric acid fuel cells and polymer electrolyte fuel cells. Among these fuel cells, solid oxide fuel cells do not necessarily require the use of a liquid component and can be internally modified when a hydrocarbon fuel is used. Therefore, research and development on solid oxide fuel cells are vigorously conducted.

For example, JP 11-329462 A discloses a solid oxide fuel cell shown in FIG 15. As shown in FIG 15, a solid oxide fuel cell 100 described in JP 11-329462 A includes a plurality of laminated power generating elements 101. Each of a plurality of power generating elements 101 includes a solid oxide electrolyte layer 102. The solid oxide electrolyte layer 102 is held between an air electrode 103 and a fuel electrode 104. A separator 105 is provided between adjacent power generating elements 101.

A plurality of grooves 105a extending along a first direction are formed on a surface of the separator 105 on the air electrode 103 side. A plurality of grooves 105a dividedly form an oxidant gas channel. An oxidant gas is supplied to the air electrode 103 via the oxidant gas channel dividedly formed by a plurality of grooves 105a. On the other hand, a plurality of grooves 105b are formed on a surface of the separator 105 on the fuel electrode 104 side. Each of a plurality of grooves 105b extends along a second direction perpendicular to the first direction. A plurality of grooves 105b dividedly form a fuel gas channel. A fuel gas is supplied to the fuel electrode 104 via the fuel gas channel dividedly formed by a plurality of grooves 105b.

In the fuel cell 100, the separator 105 is formed of a lanthanum chromite-based ceramic having conductivity.

In recent years, it has been increasingly desired to enhance power generation efficiency of fuel cells.

Examples of known Fuel Cells are disclosed in JP2002216807, JP2002050370, US2005/061151, JPH10302818, and EP0495512.

The present invention has been devised in view of the situation described above, and we have appreciated that it would be desirable to provide a solid oxide fuel cell having high power generation efficiency.

### SUMMARY OF THE INVENTION

A fuel cell, comprising: a power generating element having a solid oxide electrolyte layer, a first electrode arranged on one principal surface of the solid oxide electrolyte layer, and a second electrode arranged on the other principal surface of the solid oxide electrolyte layer; a first separator arranged on the first electrode, wherein the first separator has a first separator body and a plurality of first channel forming portions arranged at intervals from one another so as to protrude toward the first electrode side from the first separator body and dividedly forming a plurality of first channels between the first separator body and the first electrode; a second separator arranged on the second electrode, wherein the second separator has a second separator body, and a plurality of second channel forming portions arranged at intervals from one another so as to protrude toward the second electrode side from the second separator body and dividedly forming a plurality of second channels between the second separator body and the second electrode; and a first porous body arranged between the plurality of first channel forming portions and the first electrode; wherein the first separator has a via hole electrode extending from a surface of the first channel forming portion on a side opposite to the first separator body to a surface of the first separator body on a side opposite to the first channel forming portion, and the first porous body has a porous main body formed of an insulating member, and an electrode formed in the porous main body and electrically connecting the via hole electrode and the first electrode.

In a specific aspect of the fuel cell according to the present invention, the first porous body is provided so as to cover a portion of the first electrode which faces the first channel.

In another specific aspect of the fuel cell according to the present invention, the fuel cell further includes a second porous body arranged between the second channel forming portion and the second electrode.

In another specific aspect of the fuel cell according to the present invention, the second porous body is provided so as to cover a portion of the second electrode which faces the second channel.

In still another aspect of the fuel cell according to the present invention, the first and second porous bodies are formed of the same material.

In still another aspect of the fuel cell according to the present invention, the porous main body is formed of the same material as that of the first channel forming portion.

In still another aspect of the fuel cell according to the present invention, the porous main body is formed of the same material as that of the first separator body.

In a further different aspect of the fuel cell according to the present invention, the porous main body is formed of the same material as that of the first channel forming portion and the first separator body.

According to the present invention, a solid oxide fuel cell having high power generation efficiency can be provided.

### BRIEF EXPLANATION OF DRAWINGS

FIG 1 is a schematic exploded perspective view of a fuel cell according to a first embodiment useful to understand the present invention.
FIG 2 is a schematic plan view of a first separator body in the first embodiment.
FIG 3 is a schematic plan view of a first channel forming portion in the first embodiment.
FIG 4 is a schematic plan view of a first porous body in the first embodiment.
FIG 5 is a schematic plan view of an air electrode layer in the first embodiment.
FIG 6 is a schematic plan view of a solid oxide electrolyte layer in the first embodiment.
FIG 7 is a schematic plan view of a fuel electrode layer in the first embodiment.
FIG 8 is a schematic plan view of a second porous body in the first embodiment.
FIG 9 is a schematic plan view of a second channel forming portion in the first embodiment.
FIG 10 is a schematic plan view of a second separator body in the first embodiment.
FIG 11 is a schematic sectional view in the line XI-XI in FIG 3.
FIG 12 is a schematic sectional view in the line XII-XII in FIG 9.
FIG. 13 is a schematic sectional view of a fuel cell according to a second embodiment, this embodiment being in accordance to the present invention.
FIG. 14 is a schematic sectional view of the fuel cell according to the second embodiment.

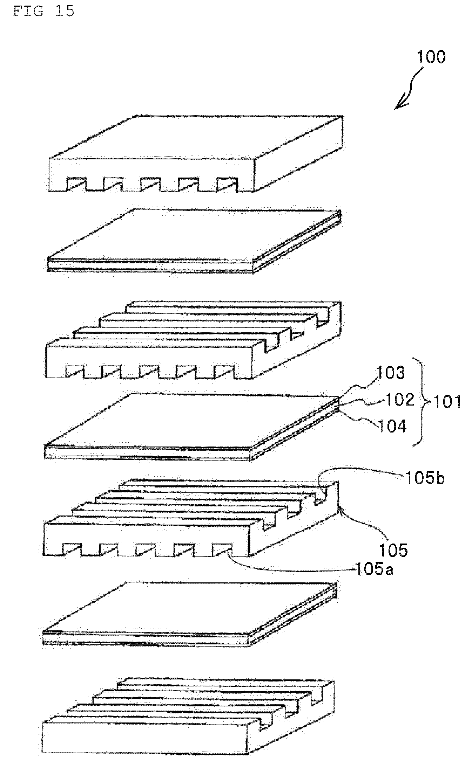

FIG. 15 is a schematic exploded perspective view of a solid oxide fuel cell described in JP 11-329462 A.

### DETAILED DESCRIPTION OF THE PREFERRED EMBODIMENTS

One example of an embodiment useful to understand the present invention will be described below. It is to be noted that the embodiments described below are merely illustrative. The present invention is in no way limited to the embodiments described below.

In each drawing referred to in embodiments etc., members having substantially the same function are denoted by the same symbols. Drawings referred to in embodiments etc. are schematically described, and the ratio of dimensions etc. of an object drawn in the drawing may be different from the ratio of dimensions etc. of the actual object. The dimension ratio etc. of an object may be different between drawings. A specific dimension ratio etc. of an object should be inferred by considering the descriptions below.

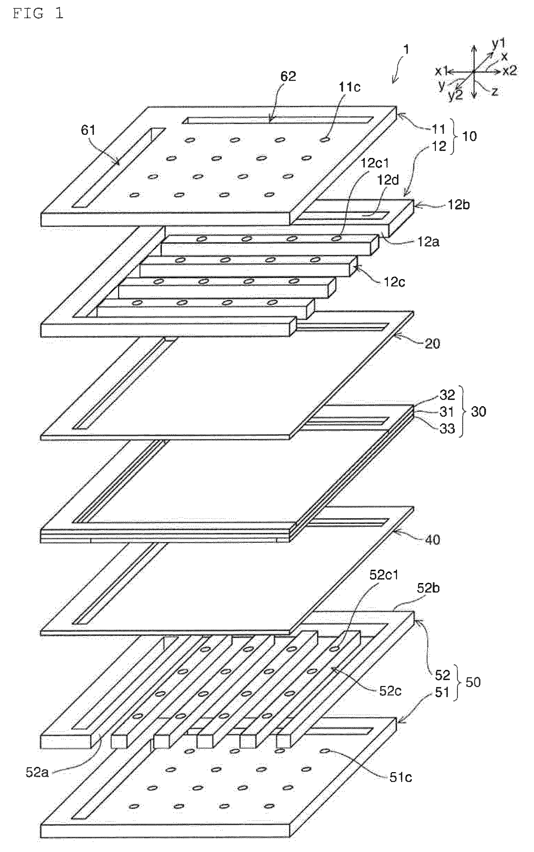

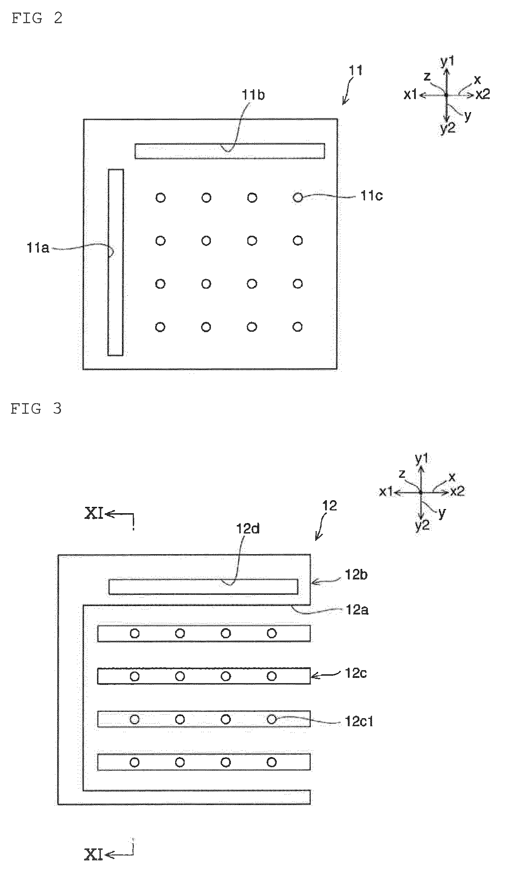

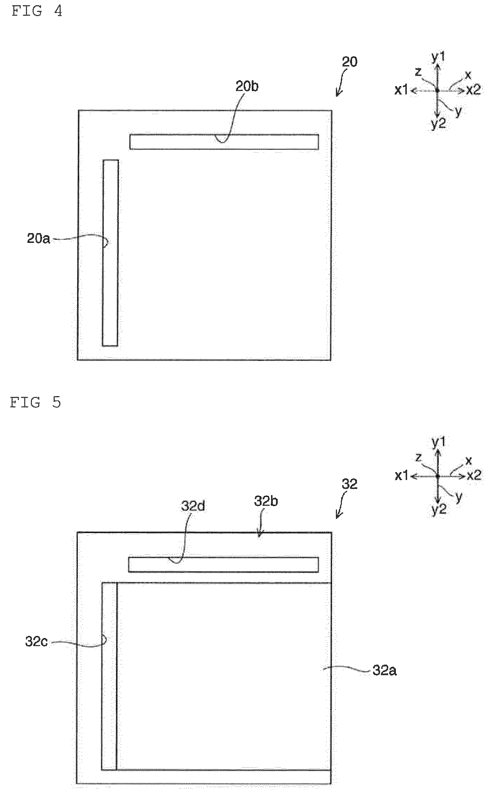

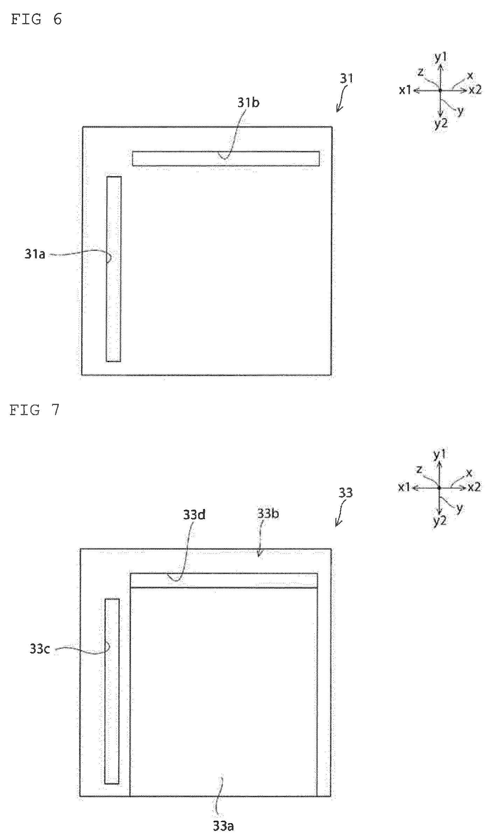

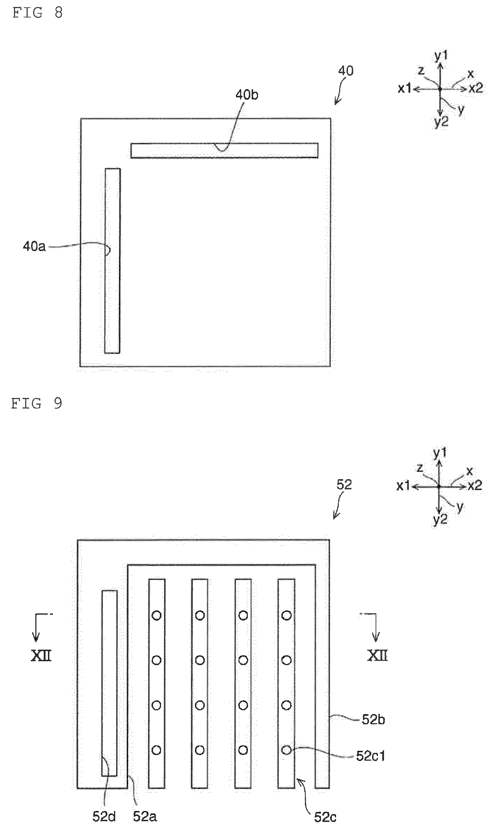

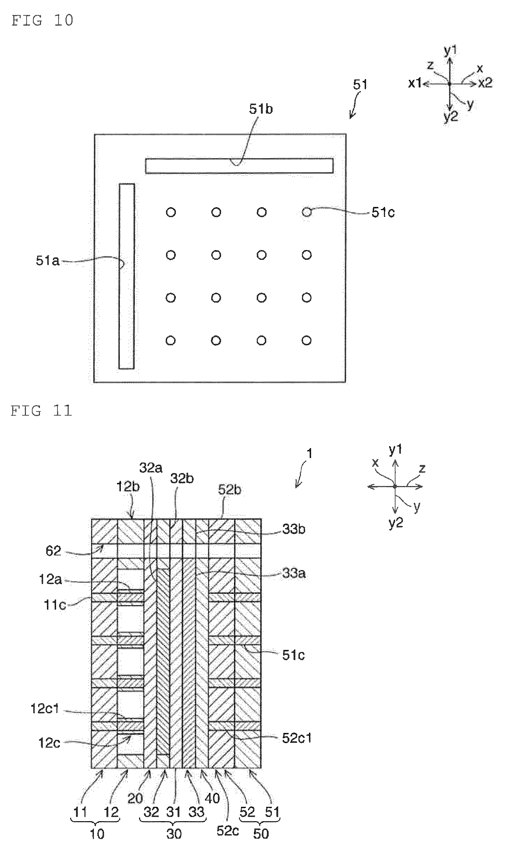

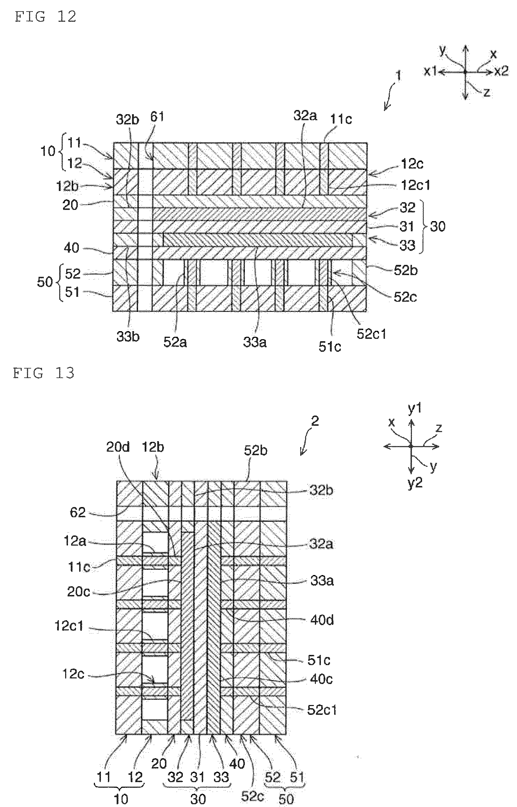

FIG 1 is a schematic exploded perspective view of a fuel cell according to a first embodiment useful to understand the present invention. FIG 2 is a schematic plan view of a first separator body in the first embodiment. FIG 3 is a schematic plan view of a first channel forming portion in the first embodiment. FIG 4 is a schematic plan view of a first porous body in the first embodiment. FIG 5 is a schematic plan view of an air electrode layer in the first embodiment. FIG 6 is a schematic plan view of a solid oxide electrolyte layer in the first embodiment. FIG 7 is a schematic plan view of a fuel electrode layer in the first embodiment. FIG 8 is a schematic plan view of a second porous body in the first embodiment. FIG 9 is a schematic plan view of a second channel forming portion in the first embodiment. FIG 10 is a schematic plan view of a second separator body in the first embodiment. FIG 11 is a schematic sectional view in the line XI-XI in FIG 3. FIG 12 is a schematic sectional view in the line XII-XII in FIG 9.

As shown in FIGs 1, 11 and 12, a fuel cell 1 of this embodiment includes a first separator 10, a first porous body 20, a power generating element 30, a second porous body 40 and a second separator 50. In the fuel cell 1, the first separator 10, the first porous body 20, the power generating element 30, the second porous body 40 and the second separator 50 are laminated in this order.

The fuel cell 1 of the present embodiment include only one laminated body of the first and second porous bodies 20 and 40 and the power generating element 30. However, the present invention is not limited to this configuration. For example, the fuel cell of the present invention may include a plurality of laminated bodies of first and second porous bodies and a power generating element. In this case, adjacent laminated bodies are isolated from each other by a separator.

### (Power Generating Element 30)

The power generating element 30 is a portion where an oxidant gas supplied from an oxidant gas channel (manifold for oxidant gas) 61 and a fuel gas supplied from a fuel gas channel (manifold for fuel gas) 62 react with each other to generate power. The oxidant gas can be formed from, for example, an oxygen-containing gas such as air or oxygen gas, etc. The fuel gas may be a gas containing a hydrogen gas, and a hydrocarbon gas such as a carbon monoxide gas, etc.

### (Solid Oxide Electrolyte Layer 31)

The power generating element 30 includes a solid oxide electrolyte layer 31. The solid oxide electrolyte layer 31 is preferably one having high ionic conductivity. The solid oxide electrolyte layer 31 can be formed from, for example, stabilized zirconia or partially stabilized zirconia. Specific examples of stabilized zirconia include 10 mol% yttria stabilized zirconia (10YSZ) and 11 mol% scandia stabilized zirconia (11ScSZ). Specific examples of partially stabilized zirconia include 3 mol% yttria stabilized zirconia (3YSZ). The solid oxide electrolyte layer 31 can also be formed from, for example, a ceria-based oxide doped with Sm, Gd and the like, or a perovskite type oxide, such as La_{0.8}Sr_{0.2}Ga_{0.8}Mg_{0.2}O_{(3-δ)}, which has LaGaO₃ as a base and in which La and Ga are partially substituted with Sr and Mg, respectively.

Through holes 31 a and 31 b forming parts of channels 61 and 62 are formed in the solid oxide electrolyte layer 31 as shown in FIG 6.

The solid oxide electrolyte layer 31 is held between an air electrode layer 32 and a fuel electrode layer 33. That is, the air electrode layer 32 is formed on one principal surface of the solid oxide electrolyte layer 31, and the fuel electrode layer 33 is formed on the other principal surface.

### (Air Electrode Layer 32)

As shown in FIG 5, the air electrode layer 32 has an air electrode 32a and a peripheral portion 32b. Through holes 32c and 32d forming parts of channels 61 and 62 are formed in the peripheral portion 32b.

The air electrode 32a is a cathode. In the air electrode 32a, oxygen captures electrons to form oxygen ions. The air electrode 32a is preferably one that is porous, has high electron conductivity and is hard to undergo a solid-solid reaction with the solid oxide electrolyte layer 31 etc. at a high temperature. The air electrode 32a can be formed from, for example, scandia stabilized zirconia (ScSZ), indium oxide doped with Sn, a PrCoO₃-based oxide, a LaCoO₃-based oxide or a LaMnO₃-based oxide. Specific examples of the LaMnO₃-based oxide include La_{0.8}Sr_{0.2}MnO₃ (common name: LSM), La_{0.8}Sr_{0.2}Co_{0.2}Fe_{0.8}O₃ (common name: LSCF) and La_{0.6}Ca_{0.4}MnO₃ (common name: LCM).

The peripheral portion 32b can be formed from, for example, a material similar to that of first and second separator bodies 11 and 51 described below.

### (Fuel Electrode Layer 33)

As shown in FIG 7, the fuel electrode layer 33 has a fuel electrode 33a and a peripheral portion 33b. Through holes 33c and 33d forming parts of channels 61 and 62 are formed in the peripheral portion 33b.

The fuel electrode 33a is an anode. In the fuel electrode 33a, oxygen ions and a fuel gas react with each other to release electrons. The air electrode 33a is preferably one that is porous, has high electron conductivity and is hard to undergo a solid-solid reaction with the solid oxide electrolyte layer 31 etc. at a high temperature. The fuel electrode 33a can be formed from, for example, NiO, a porous cermet of yttria stabilized zirconia (YSZ)/nickel metal or a porous cermet of scandia stabilized zirconia (ScSZ)/nickel metal.

### (First Separator 10)

As shown in FIGs 1, 11 and 12, the first separator 10 is arranged on the air electrode layer 32 of the power generating element 30. The first separator 10 has a function to form a channel 12a for supplying to the air electrode 32a an oxidant gas supplied from the oxidant gas channel 61, and a function to draw the air electrode 32a to outside the fuel cell 1. In a fuel cell including a plurality of power generating elements, the first separator also has a function to separate a fuel gas and an oxidant gas.

The first separator 10 has a first separator body 11 and a first channel forming portion 12 composed of linear projections. The first separator body 11 is arranged on the air electrode 32a. Through holes 11 a and 11 b forming parts of channels 61 and 62 are formed in the first separator body 11.

The first channel forming portion 12 is arranged between the first separator body 11 and the air electrode layer 32. The first channel forming portion 12 has a peripheral portion 12b and a plurality of channel forming portions 12c. A through hole 12d forming part of the fuel gas channel 62 is formed in the peripheral portion 12b.

Each of a plurality of channel forming portions 12c is provided so as to protrude toward the air electrode layer 32 side from a surface of the first separator body 11 on the air electrode layer 32 side. Each of a plurality of channel forming portions 12c is linearly provided along an x direction. A plurality of channel forming portions 12c are arranged at intervals from one another along a y direction. The channel 12a is dividedly formed between adjacent channel forming portions 12c and between the channel forming portion 12c and the peripheral portion 12b.

The materials of the first separator body 11 and the first channel forming portion 12 are not particularly limited. Each of the first separator body 11 and the first channel forming portion 12 can be formed from, for example, stabilized zirconia or partially stabilized zirconia. Each of the first separator body 11 and the first channel forming portion 12 can also be formed from, for example, a conductive ceramic such as lanthanum chromite or strontium titanate containing a rare earth metal, or an insulating ceramic such as alumina or zirconium silicate.

A plurality of via hole electrodes 12c1 are embedded in each of a plurality of channel forming portions 12c. A plurality of via hole electrodes 12c1 are formed so as to extend through a plurality of channel forming portions 12c in a z direction. In the first separator body 11, a plurality of via hole electrodes 11c are formed at positions corresponding to a plurality of via hole electrodes 12c1. A plurality of via hole electrodes 11 c are formed so as to extend through the first separator body 11. The plurality of via hole electrodes 11 c and via hole electrodes 12c1 form a plurality of via hole electrodes extending from a surface of the channel forming portion 12c on a side opposite to the first separator body 11 to a surface of the first separator body 11 on a side opposite to the channel forming portion 12c.

The materials of the via hole electrode 11 c and the via hole electrode 12c1 are not particularly limited. Each of the via hole electrode 11c and the via hole electrode 12c1 can be formed from, for example, an Ag-Pd alloy, an Ag-Pt alloy, lanthanum chromite (LaCr0₃) containing an alkali earth metal, lanthanum ferrate (LaFeO₃), or lanthanum strontium manganite (LSM).

### (Second Separator 50)

The second separator 50 is arranged on the fuel electrode layer 33 of the power generating element 30. The second separator 50 has a function to form a channel 52a for supplying to the fuel electrode 33a a fuel gas supplied from the fuel gas channel 62, and a function to draw the fuel electrode 33a to outside the fuel cell 1. In a fuel cell including a plurality of power generating elements, the second separator also has a function to separate a fuel gas and an oxidant gas.

The second separator 50 has a second separator body 51 and a second channel forming portion 52 composed of linear projections. The second separator body 51 is arranged on the fuel electrode 33a. Through holes 51 a and 51 b forming parts of channels 61 and 62 are formed in the second separator body 51.

The second channel forming portion 52 is arranged between the second separator body 51 and the fuel electrode layer 33. The second channel forming portion 52 has a peripheral portion 52b and a plurality of channel forming portions 52c. A through hole 52d forming part of the fuel gas channel 62 is formed in the peripheral portion 52b.

Each of a plurality of channel forming portions 52c is provided so as to protrude toward the fuel electrode layer 33 side from a surface of the second separator body 51 on the fuel electrode layer 33 side. Each of a plurality of channel forming portions 52c are linearly provided along a y direction perpendicular to a direction in which the channel forming portion 12c extends. A plurality of channel forming portions 52c are arranged at intervals from one another along an x direction. The channel 52a is dividedly formed between adjacent channel forming portions 52c and between the channel forming portion 52c and the peripheral portion 52b. Thus, the direction in which the channel 52a extends is orthogonal to the direction in which the channel 12a extends.

The materials of the second separator body 51 and the second channel forming portion 52 are not particularly limited. Each of the second separator body 51 and the second channel forming portion 52 can be formed from, for example, stabilized zirconia or partially stabilized zirconia. Each of the second separator body 51 and the second channel forming portion 52 can also be formed from, for example, a conductive ceramic such as lanthanum chromite or strontium titanate containing a rare earth metal, or an insulating ceramic such as alumina or zirconium silicate.

A plurality of via hole electrodes 52c1 are embedded in each of a plurality of channel forming portions 52c. A plurality of via hole electrodes 52c1 are formed so as to extend through a plurality of channel forming portions 52c in a z direction. In the second separator body 51, a plurality of via hole electrodes 51 c are formed at positions corresponding to a plurality of via hole electrodes 52c1. A plurality of via hole electrodes 51c are formed so as to extend through the second separator body 51. The plurality of via hole electrodes 51 c and via hole electrodes 52c1 form a plurality of via hole electrodes extending from a surface of the channel forming portion 52c on a side opposite to the second separator body 51 to a surface of the second separator body 51 on a side opposite to the channel forming portion 52c.

The materials of the via hole electrode 51 c and the via hole electrode 52c1 are not particularly limited. Each of the via hole electrode 51 c and the via hole electrode 52c1 can be formed from, for example, an Ag-Pd alloy, an Ag-Pt alloy, a nickel metal, an yttria stabilized zirconia (YSZ)/nickel metal or a scandia stabilized zirconia (ScSZ)/nickel metal.

### (First Porous Body 20 and Second Porous Body 40)

The first porous body 20 is arranged between the first channel forming portion 12c and the air electrode 32a. The first porous body 20 is formed so as to cover a portion of the air electrode 32a which faces the channel 12a. Specifically, in this embodiment, the first porous body 20 is formed so as to cover substantially the whole of the air electrode 32a.

On the other hand, a second porous body 40 is arranged between the second channel forming portion 52c and the fuel electrode 33a. The second porous body 40 is formed so as to cover a portion of the fuel electrode 33a which faces the channel 52a. Specifically, in this embodiment, the second porous body 40 is formed so as to cover substantially the whole of the fuel electrode 33a.

In the present invention, the first porous body should be arranged between the first channel forming portion and the air electrode. For example, the first porous body may be arranged only between the first channel forming portion and the air electrode. The second porous body should be arranged between the second channel forming portion and the fuel electrode. For example, the second porous body may be arranged only between the second channel forming portion and the fuel electrode.

Through holes 20a, 20b, 40a and 40b forming parts of channels 61 and 62 are formed in each of the first and second porous bodies 20 and 40.

In this embodiment, each of the first and second porous bodies 20 and 40 has open cells. The porosity of each of the first and second porous bodies 20 and 40 is preferably 5% to 70%, more preferably 15% to 60%. The thickness of each of the first and second porous bodies 20 and 40 may be the same, or may be different. The thickness can be arbitrarily set according to materials to form the electrode, the separator and the porous body with consideration given to required characteristics of the fuel cell.

The materials of the first and second porous bodies 20 and 40 are not particularly limited. In this embodiment, each of the first and second porous materials 20 and 40 is formed of a conductive member. Therefore, the air electrode 32a is electrically connected to the via hole electrodes 12c1 and 11 c through the first porous body 20. The fuel electrode 33a is electrically connected to the via hole electrodes 52c1 and 51 c through the second porous body 40.

The first porous body 20 can be formed from a conductive ceramic or the same material as that of the air electrode 32a. The second porous body 40 can be formed from a conductive ceramic or the same material as that of the fuel electrode 33a. As the conductive ceramic, lanthanum chromite containing a rare earth metal, a titanic acid compound, or the like can be used to mold the porous body.

In a fuel cell 100 described in JP 11-329462 A, an oxidant gas and a fuel gas are supplied to an air electrode 103 and a fuel electrode 104 via a plurality of grooves 105a and 105b. Therefore, portions of the air electrode 103 and the fuel electrode 104, which face the grooves 105a and 105b, are supplied with an oxidant gas and a fuel gas. However, portions of the air electrode 103 and the fuel electrode 104, which are in contact with a separator 105, are supplied with substantially no oxidant gas and fuel gas. Therefore, contribution to power generation of portions of the air electrode 103 and the fuel electrode 104, which are in contact with the separator 105, is small.

In contrast, in this embodiment, the first porous body 20 is arranged between the air electrode 32a and the first channel forming portion 12c. Therefore, an oxidant gas from the channel 12a diffuses toward the z direction and also diffuses toward the x and y directions in the first porous body 20. As a result, the oxidant gas is supplied to not only a portion of the air electrode 32a which is located below the channel 12a, but also a portion located below the first channel forming portion 12c.

Further, in this embodiment, the second porous body 40 is arranged between the fuel electrode 33a and the second channel forming portion 52c. Therefore, a fuel gas from the channel 52a diffuses toward the z direction and also diffuses toward the x and y directions in the second porous body 40. As a result, the fuel gas is supplied to not only a portion of the fuel electrode 33a which is located below the channel 52a, but also a portion located below the second channel forming portion 52c.

Therefore, in this embodiment, contribution to power generation of portions of the air electrode 32a and the fuel electrode 33a, which are located below the channel forming portions 12c and 52c, is large. That is, substantially the whole of the air electrode 32a and the fuel electrode 33a significantly contributes to power generation. Accordingly, high power efficiency can be achieved.

In this embodiment, the first porous body 20 is provided so as to cover a portion of the air electrode 32a which faces the channel 12a. Therefore, an oxidant gas can be more efficiently supplied to a portion of the air electrode 32a which is located below the first channel forming portion 12c as compared to a case where the first porous body 20 is provided only between the air electrode 32a and the first channel forming portion 12c. Further, the second porous body 40 is provided so as to cover a portion of the fuel electrode 33a which faces the channel 52a. Therefore, a fuel gas can be more efficiently supplied to a portion of the fuel electrode 33a which is located below the second channel forming portion 52c as compared to a case where the second porous body 40 is provided only between the fuel electrode 33a and the second channel forming portion 52c. Accordingly, higher power efficiency can be achieved.

In this embodiment, the porous bodies 20 and 40 are provided so as to cover portions of the air electrode 32a and the fuel electrode 33a which face the channels 12a and 52a. That is, the porous bodies 20 and 40 are provided in a planar form. Therefore, for example, stiffness of the power generating element 30 can be enhanced as compared to a case where the porous bodies 20 and 40 are provided in a stripe form only below the channel forming portions 12c and 52c. Accordingly, occurrence of deformation such as warpage in the power generating element 30 can be suppressed. Accordingly, long-term reliability of the fuel cell 1 can be improved.

In particular, in this embodiment, the air electrode 32a and the fuel electrode 33a are harder to be deformed because the surfaces of the air electrode 32a and the fuel electrode 33a are sintered with the first and second porous bodies 20 and 40. Therefore, long-term reliability of the fuel cell 1 can be more effectively improved.

Further, the solid oxide electrolyte layer 31 can be made thin without significantly reducing stiffness of the power generating element 30. Accordingly, power generation efficiency can be further enhanced. In particular, the initial power generation efficiency can be further enhanced.

For more effectively suppressing warpage of the power generating element 30, it is preferable that the first porous body 20 and the second porous body 40 are formed of the same material. For enhancing stiffness of the power generating portion 20, it is preferable that the burning shrinkage factor of the material of the power generating portion 20 is large as compared to the burning shrinkage factor of the power generating portion 30, and the linear thermal expansion coefficient of the material of the power generating portion 20 is small as compared to the burning shrinkage factor of the power generating portion 30. Consequently, compressive stress is applied to the power generating portion 20 to enhance stiffness.

Here, the term "formed of the same material" means that principal components are the same, and do not necessarily mean that components are exactly the same including impurities.

In this embodiment, a case has been described where both the first and second porous bodies 20 and 40 are provided. However, the present invention is not limited to this configuration. In the present invention, for example, only one of the first and second porous bodies may be provided.

Other examples of preferred embodiments of carrying out the present invention will be described below. In the descriptions below, members having substantially the same functions as those in the first embodiment are denoted by the same symbols, and explanations thereof are omitted.

### (Second Embodiment)

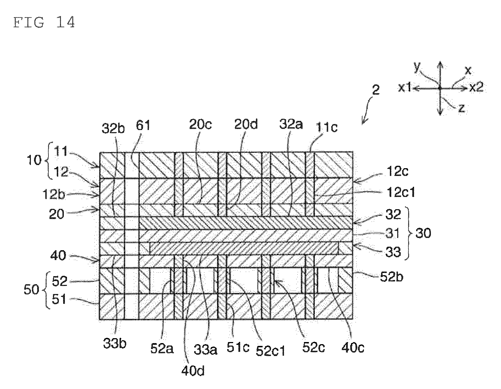

FIG 13 is a schematic sectional view of a fuel cell according to a second embodiment, this embodiment being in accordance to the present invention. FIG 14 is a schematic sectional view of the fuel cell according to the second embodiment.

A fuel cell 2 of this embodiment shown in FIGs 13 and 14 has substantially the same configuration as that of the fuel cell 1 of the first embodiment except for the configurations of first and second porous bodies 20 and 40. Therefore, here, the configurations of the first and second porous bodies 20 and 40 in this embodiment are described, and for others, descriptions of the first embodiment are incorporated.

In this embodiment, the first porous body 20 has a porous main body 20c and a plurality of via hole electrodes 20d. The porous main body 20c is formed of an insulating member. In this embodiment, the porous main body 20c is formed of the same material as that of the first channel forming portion 12c.

A plurality of via hole electrodes 20d are formed in the porous main body 20c. Each of a plurality of via hole electrodes 20d extends through the porous main body 20c. A plurality of via hole electrodes 20d are provided at positions corresponding to the positions of via hole electrodes 12c1. The air electrode 32a and the via hole electrode 12c1 are electrically connected by the plurality of via hole electrodes 20d. In this embodiment, a plurality of via hole electrodes 20d are formed of the same material as that of the via hole electrode 12c1.

The second porous body 40 has a porous main body 40c and a plurality of via hole electrodes 40d. The porous main body 40c is formed of an insulating member. In this embodiment, the porous main body 40c is formed of the same material as that of the second channel forming portion 52c.

A plurality of via hole electrodes 40d are formed in the porous main body 40c. Each of a plurality of via hole electrodes 40d extends through the porous main body 40c. A plurality of via hole electrodes 40d are provided at positions corresponding to the positions of via hole electrodes 52c1. The fuel electrode 33a and the via hole electrode 52c1 are electrically connected by the plurality of via hole electrodes 40d. In this embodiment, a plurality of via hole electrodes 40d are formed of the same material as that of the via hole electrode 52c1.

In this embodiment, high power generation efficiency can be achieved as in the first embodiment. Further, warpage of the power generating element 30 can be suppressed.

### DESCRIPTION OF REFERENCE SYMBOLS

- 1,2: fuel cell
- 10: first separator
- 11: first separator body
- 11a, 11b: through hole
- 11c: via hole electrode
- 12: first channel forming portion
- 12a: first channel
- 12b: peripheral portion
- 12c: first channel forming portion
- 12c1: via hole electrode
- 12d: through hole
- 20: first porous body
- 20a, 20b, 40a, 40b: through hole
- 20c: porous main body
- 20d: via hole electrode
- 30: power generating element
- 31: solid oxide electrolyte layer
- 31a, 31b: through hole
- 32: air electrode layer
- 32a: air electrode
- 32b: peripheral portion
- 32c, 32d: through hole
- 33: fuel electrode layer
- 33a: fuel electrode
- 33b: peripheral portion
- 33c, 33d: through hole
- 40: second porous body
- 40c: porous main body
- 40d: via hole electrode
- 50: second separator
- 51: second separator body
- 51a, 51b: through hole
- 51c: via hole electrode
- 52: second channel forming portion
- 52a: second channel
- 52b: peripheral portion
- 52c: second channel forming portion
- 52c1: via hole electrode
- 52d: through hole
- 61: oxidant gas channel
- 62: fuel gas channel

## Claims

1. A fuel cell (1), comprising:
a power generating element (30) having a solid oxide electrolyte layer (31), a first electrode (32) arranged on one principal surface of the solid oxide electrolyte layer, and a second electrode (33) arranged on the other principal surface of the solid oxide electrolyte layer;
a first separator (10) arranged on the first electrode (32), wherein the first separator has a first separator body (11) and a plurality of first channel forming portions (12c) arranged at intervals from one another so as to protrude toward the first electrode (32) side from the first separator body (11) and dividedly forming a plurality of first channels (12a) between the first separator body (11) and the first electrode (32);
a second separator (50) arranged on the second electrode (33), wherein the second separator (50) has a second separator body (51), and a plurality of second channel forming portions (52c) arranged at intervals from one another so as to protrude toward the second electrode (33) side from the second separator body (51) and dividedly forming a plurality of second channels (52a) between the second separator body (51) and the second electrode (33); and
a first porous body (20) arranged between the plurality of first channel forming portions (12c) and the first electrode (32);
wherein the first separator (10) has a via hole electrode (12c1) extending from a surface of the first channel forming portion on a side opposite to the first separator body (11) to a surface of the first separator body (11) on a side opposite to the first channel forming portion, and
the first porous body (20) has a porous main body (20c) formed of an insulating member, and an electrode (20d) formed in the porous main body (20c) and electrically connecting the via hole electrode (12c1) and the first electrode (32).

2. The fuel cell according to claim 1, wherein the first porous body (20) is provided so as to cover a portion of the first electrode (32) which faces the plurality of first channels (12a).

3. The fuel cell according to one of claims 1 and 2, wherein the fuel cell further comprises a second porous body (40) arranged between the second channel forming portion (52c) and the second electrode (33).

4. The fuel cell according to claim 3, wherein the second porous body (40) is provided so as to cover a portion of the second electrode (33) which faces the plurality of second channels (52a).

5. The fuel cell according to one of claims 3 and 4, wherein the first and second porous bodies (20, 40) are formed of the same material.

6. The fuel cell according to claim 1, wherein the porous main body (20c) is formed of the same material as the first channel forming portion (12c).

7. The fuel cell according to claim 1, wherein the porous main body (20c) is formed of the same material as the first separator body (11).

8. The fuel cell according to claim 7, wherein the porous main body (20c), the first channel forming portion (12c) and the first separator body (11) are formed of the same material.

## Patentansprüche

1. Brennstoffzelle (1), Folgendes umfassend:
ein Stromerzeugungselement (30) mit einer Festoxid-Elektrolytschicht (31), einer ersten Elektrode (32), die auf einer Hauptfläche der Festoxid-Elektrolytschicht angeordnet ist, und einer zweiten Elektrode (33), die auf der anderen Hauptfläche der Festoxid-Elektrolytschicht angeordnet ist;
einen ersten Separator (10), der auf der ersten Elektrode (32) angeordnet ist, wobei der erste Separator einen ersten Separatorkörper (11) und mehrere erste kanalbildende Abschnitte (12c), die mit Abständen voneinander angeordnet sind, sodass sie von dem ersten Separatorkörper (11) hin zur Seite der ersten Elektrode (32) vorstehen, und getrennt mehrere erste Kanäle (12a) zwischen dem ersten Separatorkörper (11) und der ersten Elektrode (32) ausbilden, aufweist;
einen zweiten Separator (50), der auf der zweiten Elektrode (33) angeordnet ist, wobei der zweite Separator (50) einen zweiten Separatorkörper (51) und mehrere zweite kanalbildende Abschnitte (52c), die mit Abständen voneinander angeordnet sind, sodass sie von dem zweiten Separatorkörper (51) hin zur Seite der zweiten Elektrode (33) vorstehen, und getrennt mehrere zweite Kanäle (52a) zwischen dem zweiten Separatorkörper (51) und der zweiten Elektrode (33) ausbilden, aufweist; und
einen ersten porösen Körper (20), der zwischen den mehreren ersten kanalbildenden Abschnitten (12c) und der ersten Elektrode (32) angeordnet ist;
wobei der erste Separator (10) eine Durchkontaktierungslochelektrode (12c1) aufweist, die sich von einer Oberfläche des ersten kanalbildenden Abschnitts auf einer Seite gegenüber dem ersten Separatorkörper (11) zu einer Oberfläche des ersten Separatorkörpers (11) auf einer Seite gegenüber dem ersten kanalbildenden Abschnitt erstreckt, und
der erste poröse Körper (20) einen porösen Hauptkörper (20c), der aus einem Isolierelement ausgebildet ist, und eine Elektrode (20d), die in dem porösen Hauptkörper (20c) ausgebildet ist und die Durchkontaktierungslochelektrode (12c1) und die erste Elektrode (32) elektrisch verbindet, aufweist.

2. Brennstoffzelle nach Anspruch 1, wobei der erste poröse Körper (20) so vorgesehen ist, dass er einen Abschnitt der ersten Elektrode (32) bedeckt, der den mehreren ersten Kanälen (12a) zugewandt ist.

3. Brennstoffzelle nach einem der Ansprüche 1 und 2, wobei die Brennstoffzelle weiterhin einen zweiten porösen Körper (40) umfasst, der zwischen dem zweiten kanalbildenden Abschnitt (52c) und der zweiten Elektrode (33) angeordnet ist.

4. Brennstoffzelle nach Anspruch 3, wobei der zweite poröse Körper (40) so vorgesehen ist, dass er einen Abschnitt der zweiten Elektrode (33) bedeckt, der den mehreren zweiten Kanälen (52a) zugewandt ist.

5. Brennstoffzelle nach einem der Ansprüche 3 und 4, wobei der erste und zweite poröse Körper (20, 40) aus dem gleichen Material ausgebildet sind.

6. Brennstoffzelle nach Anspruch 1, wobei der poröse Hauptkörper (20c) aus dem gleichen Material ausgebildet ist wie der erste kanalbildende Abschnitt (12c).

7. Brennstoffzelle nach Anspruch 1, wobei der poröse Hauptkörper (20c) aus dem gleichen Material ausgebildet ist wie der erste Separatorkörper (11).

8. Brennstoffzelle nach Anspruch 7, wobei der poröse Hauptkörper (20c), der erste kanalbildende Abschnitt (12c) und der erste Separatorkörper (11) aus dem gleichen Material ausgebildet sind.

## Revendications

1. Pile à combustible (1), comprenant :
un élément de génération de puissance (30) ayant une couche d'électrolyte à oxyde solide (31), une première électrode (32) agencée sur une surface principale de la couche d'électrolyte à oxyde solide, et une deuxième électrode (33) agencée sur l'autre surface principale de la couche d'électrolyte à oxyde solide ;
un premier séparateur (10) agencé sur la première électrode (32), le premier séparateur ayant un corps de premier séparateur (11) et une pluralité de portions formant un premier canal (12c) agencées à intervalles les unes des autres de manière à faire saillie vers le côté première électrode (32) à partir du corps de premier séparateur (11) et formant de manière divisée une pluralité de premiers canaux (12a) entre le corps de premier séparateur (11) et la première électrode (32) ;
un deuxième séparateur (50) agencé sur la deuxième électrode (33), le deuxième séparateur (50) ayant un corps de deuxième séparateur (51), et une pluralité de portions formant un deuxième canal (52c) agencées à intervalles les unes des autres de manière à faire saillie vers le côté deuxième électrode (33) à partir du corps de deuxième séparateur (51) et formant de manière divisée une pluralité de deuxièmes canaux (52a) entre le corps de deuxième séparateur (51) et la deuxième électrode (33) ; et
un premier corps poreux (20) agencé entre la pluralité de portions formant un premier canal (12c) et la première électrode (32) ;
le premier séparateur (10) ayant une électrode à trou d'interconnexion (12c1) s'étendant d'une surface de la portion formant un premier canal sur un côté opposé au corps de premier séparateur (11) jusqu'à une surface du corps de premier séparateur (11) sur un côté opposé à la portion formant un premier canal, et
le premier corps poreux (20) ayant un corps principal poreux (20c) formé par un élément isolant, et une électrode (20d) formée dans le corps principal poreux (20c) et connectant électriquement l'électrode à trou d'interconnexion (12c1) et la première électrode (32).

2. Pile à combustible selon la revendication 1, le premier corps poreux (20) étant fourni de manière à recouvrir une portion de la première électrode (32) qui fait face à la pluralité de premiers canaux (12a).

3. Pile à combustible selon l'une des revendications 1 et 2, la pile à combustible comprenant en outre un deuxième corps poreux (40) agencé entre la portion formant un deuxième canal (52c) et la deuxième électrode (33).

4. Pile à combustible selon la revendication 3, le deuxième corps poreux (40) étant fourni de manière à recouvrir une portion de la deuxième électrode (33) qui fait face à la pluralité de deuxièmes canaux (52a).

5. Pile à combustible selon l'une des revendications 3 et 4, les premier et deuxième corps poreux (20, 40) étant formés par le même matériau.

6. Pile à combustible selon la revendication 1, le corps principal poreux (20c) étant formé par le même matériau que la portion formant un premier canal (12c).

7. Pile à combustible selon la revendication 1, le corps principal poreux (20c) étant formé par le même matériau que le corps de premier séparateur (11).

8. Pile à combustible selon la revendication 7, le corps principal poreux (20c), la portion formant un premier canal (12c) et le corps de premier séparateur (11) étant formés par le même matériau.
